# EUROPÄISCHE PATENTSCHRIFT

(11) **EP 1 001 859 B1**
(45) Veröffentlichungstag und Bekanntmachung des Hinweises auf die Patenterteilung: **28.08.2002**
(21) Anmeldenummer: 98943665.4
(22) Anmeldetag: 01.07.1998
(51) Int. Cl.: B21D 53/00

(54) **VERFAHREN ZUR HERSTELLUNG VON WÄLZLAGERRINGEN AUS STAHL**
METHOD FOR PRODUCING STEEL ROLLING BEARING RINGS
PROCEDE DE PRODUCTION DE BAGUES DE ROULEMENT EN ACIER

(30) Priorität: 04.08.1997 DE 19734563
(43) Veröffentlichungstag der Anmeldung: 24.05.2000
(73) Patentinhaber: Mannesmannröhren-Werke AG, 45473 Mülheim a.d. Ruhr (DE)
(72) Erfinder: TENBRACK, Karl, D-45549 Sprockhövel (DE); FÖRSTER, Wilfried, D-01609 Gröditz (DE); STEPHAN, Roland, D-01589 Riesa (DE); SOMMERFELD, Herbert, D-22926 Ahrensburg (DE)
(74) Vertreter: Meissner, Peter E., Dipl.-Ing.
(86) Internationale Anmeldenummer: DE9801899
(87) Internationale Veröffentlichungsnummer: WO99007495

(56) Entgegenhaltungen:
- WO-A-95/29777
- WO-A-95/34387
- DE-A- 3 535 811
- DE-A- 3 804 654
- DE-A- 19 513 314
- DE-A- 19 520 833
- DE-A- 19 526 900
- DE-C- 19 541 135
- GB-A- 1 361 553
- US-A- 3 769 671

## Beschreibung

Die Erfindung betrifft ein Verfahren zur Herstellung von Wälzlagerringen aus Stahl gemäß dem Oberbegriff des Patentanspruches 1.

Der Werkstoff mit der DIN-Bezeichnung 100 Cr 6 und entsprechende Stähle anderer Normen und Regelwerke, aus denen im europäischen Raum überwiegend Wälzlagerringe als Ausgangsprodukt für Wälzlager hergestellt werden, zählt wegen des hohen Kohlenstoffgehaltes zu den übereutektoiden Stählen. Zur Herstellung eines warmgefertigten Rohres als Ausgangsmaterial für die Herstellung einzelner Wälzlagerringe werden folgende Verfahren angewendet.

Ausgehend vom Roheisen über das LD-Stahlwerk und einem Pfannenofen sowie einer Pfannenentgasung oder alternativ ausgehend vom E-Stahlwerk, einem Pfannenofen und einer Pfannenentgasung und in besonderen Fällen über ein Umschmelzstahlwerk wird ein Block gegossen, der auf einer Vorblockwalzstraße zu einem Röhrenrund gewalzt wird. Dieses Röhrenrund wird vorzugsweise mittels des Assel-Verfahrens zu einem warmgefertigten Rohr umgeformt (siehe hierzu Stahlrohr-Handbuch 10. Auflage, Vulkan-Verlag, Essen 1986, Seiten 141-143). Die Assel-Straße weist üblicherweise einen Drehherdofen als Erwärmungsanlage auf, dem ein als Schrägwalzwerk ausgebildeter Lochapparat zur Erzeugung eines Hohlkörpers folgt. Dieser Hohlkörper wird einem Assel-Walzwerk bestehend aus drei am Umfang gleichmäßig verteilt angeordneten Schrägwalzen zugeführt, die mit einer Schulterkalibrierung versehen sind. Nach dem Herausziehen der als Innenwerkzeug dienenden Stange wird das Zwischenrohr nacherwärmt und über ein mehrgerüstiges Reduzierwalzwerk und über ein nachgeschaltetes Maßwalzwerk das warmgefertigte Rohr erzeugt.

Nachteilig bei diesem Verfahren ist, dass das eingesetzte Röhrenrund abmessungsnah dem warmgefertigten Rohr sein muß und zur Abdeckung des Lieferprogrammes eine Vielzahl von gewalztem bzw. geschmiedetem Röhrenrundmaterial erforderlich ist.

Die Assel-Straße ist zwar die bevorzugte Anlage zur Herstellung von Wälzlagerrohren, aber auch andere Rohrerzeugungsanlagen, wie Stoßbankanlagen oder Rohrkontistraßen, werden benutzt immer unter Verwendung von vorverformten und diffusionsgeglühtem Einsatzmaterial.

Bekannt ist auch, statt eines Gußblockes (Ingot) einen Stranggußblock (Bloom) - überwiegend im Rechteckformat - zu erzeugen und diesen über einen Walz- oder Schmiedeprozeß zu einem Röhrenrund umzuformen. Alternativ wird statt eines Rechteckformates ein Rundstrangguß hergestellt, wobei auch dieser Stranggußblock nach dem Abtrennen gewalzt oder geschmiedet wird (siehe La Revue de Métallurgie CIT, April 1989, Seiten 344-350). Nach dem Stand der Technik wird der Umformgrad derart gewählt, dass ein Verschmiedungs- oder Walzgrad von λ = 5 erzielt wird. Dem erwähnten Walz- oder Schmiedeprozeß ist immer eine Diffusionsglühung vorgeschaltet, um die vom Gießverfahren herrührenden Seigerungen und groben Karbid-Ausscheidungen weitgehend abzubauen bzw. zu verringern. Alle erwähnten Herstellverfahren für das Vormaterial sind kostenaufwendig, da große kapitalintensive Anlagen für die Umformung benötigt werden und das Material mehrfach bewegt wird. Da die Stäbe durch die Streckungen immer wieder aufgeteilt werden müssen, fällt auch eine entsprechende Menge an Schrottmaterial an. Jeder zusätzliche Arbeitsund Transportschritt bedeutet eine Gefahr der Erzeugung weiterer oder sich verstärkender Fehler, deren Beseitigung die Kosten erhöht.

In der DE-PS 37 38 858 wird darauf verwiesen, dass die warmgewalzten Vorrohre vor der Reduzierung ihrer Innen- und Außendurchmesser auf die gewünschten Endmaße mittels Kaltpilgern oder Kaltziehen einem einformenden Langzeitglühvorgang unterworfen werden, um den lamellaren in das Gefüge eingebetteten Zementit in globularen Zementit umzuwandeln. Durch dieses Langzeitglühen bilden sich aber vergleichsweise dicke Zunderschichten auf der Außen- und Innenoberfläche der Vorrohre und die Randzonen werden stark entkohlt. Die Vorrohre werden deshalb bezüglich ihrer Außendurchmesser geschält, wobei die äußeren Zunderschichten entfernt werden.
im Anschluß an dieses Schälen werden die Vorrohre aufbereitet, d.h. sie werden gebeizt, gebondert bzw. gefettet. Nach dem Kaltpilgern bzw. Kaltziehen werden die Rohre als sogenannte Stangen in Magazine eines Mehrspindelautomaten (6 oder 8 Spindeln) eingelegt und zerspanend daraus einen Wälzlagerring hergestellt. Die Ringe werden anschließend vergütet, d.h. gehärtet und angelassen. Da bei dieser Wärmebehandlung die Ringe verzundern und sich verziehen, muß der Ring auf Endmaß geschliffen werden. Beim Wälzlagerhersteller erfolgt dann die Montage zu einem Wälzlager durch Zusammenfügen von Außen- und Innenring, Wälzkörper und Käfig ggf. Abdeckscheiben.

Zur Reduzierung der Herstellkosten in den Vorstufen ist bereits vorgeschlagen worden (DE 195 20 833 A1), das Stranggußmaterial im Gußzustand und ohne Wärmebehandlung (Diffusionsglühung) einer Rohrerzeugungsanlage zuzuführen.

Ein weiterer Schritt in dieser Richtung war der Wegfall der Langzeitglühung (GKZ-Glühung) durch ein geregeltes Endwalzen in einem bestimmten Temperaturbereich mit vorgegebenen Verformungsgraden, was einem TM-Walzen sehr nahe kommt (DE 195 13 314 A1). Alternativ zum bisher bekannten Abstechen der Ringe im Zuge der zerspanenden Bearbeitung kaltgepilgerter bzw. kaltgezogener Rohre kann durch Warmabtrennen ein sogenannter Rohring erzeugt werden (WO 95/29777). Alle aufgeführten Vorschläge führen zu einer Kostenreduzierung der Herstellung von Wälzlagerringen.

Aufgabe der Erfindung ist es, ausgehend von diesem bekannten Stand der Technik, ein Verfahren zur Herstellung von Wälzlagerringen aus Stahl anzugeben, das eine noch weitere Kostenreduzierung ermöglicht.

Diese Aufgabe wird ausgehend vom Oberbegriff in Verbindung mit den kennzeichnenden Merkmalen des Patentanspruches 1 gelöst. Vorteilhafte Weiterbildungen sind Bestandteil von Unteransprüchen.

Kern der Erfindung ist der kostengünstige Einsatz eines warmgefertigten Rohres als Ausgangsmaterial in Verbindung mit einem Warmabtrennen zur Herstellung eines Rohringes, aus dem mittels einer leistungsfähigen Kaltweiterverarbeitung kostengünstig ein Grün- oder Weichring eines Wälzlagerringes, d.h. ein Außen- oder Innenring hergestellt wird. Der Hauptanteil der Kaltweiterverarbeitung ist ein Drehen, das hohe Schnittgeschwindigkeiten und damit kurze Taktzeiten erlaubt. Die kostenintensive Herstellung eines kaltgepilgerten oder kaltgezogenen Rohres als Ausgangsprodukt für die Ringherstellung entfällt bei dem erfindungsgemäßen Verfahren, ebenso alle damit gekoppelten Transport- und Handhabungsschritte.

Als optimale Abfolge wird vorgeschlagen, das warmgefertigte Rohr ex Kühlbett ohne jede weitere Nachbehandlung, insbesondere ohne Richten, ohne Wärmebehandlung und ohne zerstörungsfreie Prüfung der Vorrichtung für das Warmabtrennen zuzuführen und aus dem Rohring in nur einer einzigen Einrichtung und mit nur einer Umspannung mittels einer optimiert zeitgetakteten mehrstufigen Drehoperation einen Wälzlagerring herzustellen und diesen hinsichtlich seiner Abmessung und Fehlerfreiheit zu prüfen. Um den erforderlichen Zerspanungsaufwand im Hinblick auf kurze Taktzeiten (< 8 sec.) niedrig zu halten, sollte der Rohring in seinen Maßen und seiner Kontur dem angestrebten Idealzustand so nahe wie möglich kommen. Dies ist aber verfahrensbedingt nicht immer gegeben. So sind beispielsweise die beiden Stirnflächen nicht immer genau planparallel. Weiterhin läßt sich meistenteils eine Gratbildung nach innen im Bohrbereich nicht ganz vermeiden, da das Warmabtrennen ohne Innenabstützung erfolgt. Bei Beachtung dieser Gegebenheiten hat es sich als vorteilhaft herausgestellt der eigentlichen Kaltweiterverarbeitung eine Stanz- und Preßoperation und/oder ein partielles Fertigschleifen vorzuschalten. Das partielle Fertigschleifen bei einem Außenring besteht aus einem Schleifen der beiden Stirnflächen und / oder der Mantelfläche des Rohringes auf Weichringmaß. Auf diese Weise kann das mehrstufige Drehen in einem optimalen Bereich erfolgen und der Werkzeugverschleiß ist geringer. Insbesondere das vorgeschaltete Fertigschleifen des Außendurchmessers des Rohringes ermöglicht es, auf das Drehen des Außendurchmessers auf Endmaß zu verzichten und somit einen Arbeitsgang einzusparen, was eine Erhöhung der Taktzeit bedeutet. Außerdem ist in diesem Falle nur eine Aufspannung erforderlich, so daß eine Umspannung entfällt. Der zusätzliche Aufwand der vorgeschalteten Stanz- und Preßoperation und/oder des partiellen Fertigschleifens muß abgewogen werden gegen die Leistungssteigerung der Drehoperation. Alternativ kann der vorbehandelte Rohring auch auf herkömmlichen Drehmaschinen mit zweimaligen Spannen bearbeitet werden. Ein weiteres Hilfsmittel zur Erhöhung der Zerspanungsleistung ist die Zufuhr eines Schmiermittels. Als besonders vorteilhaft hat sich eine impulsartige Zufuhr eines Gemisches aus Druckluft und üblicher Bohremulsion herausgestellt. Impulsartig soll in diesem Zusammenhang bedeuten, dass die Zufuhr nur während des eigentlichen Zerspanungsvorganges erfolgt und während des Weitertaktens und Heranführen der Werkzeuge abgeschaltet bleibt.

Die ansonsten übliche Vergütung des sogenannten Grün- oder Weichringes kann vorteilhaft in den Zerspanungsprozeß integriert werden. Beispielsweise kann dieses Vergüten direkt nach der Stanz- und Preßoperation durchgeführt werden. Die zerspanende Kaltweiterverarbeitung ist dann ein Hartdrehen und/oder ein Hartschleifen, wofür in letzter Zeit eine entsprechende Verarbeitungstechnologie entwickelt worden ist.

Der Vorteil des vorgeschlagenen Verfahrensweges ist darin zu sehen, daß unter Beibehaltung der Kostenvorteile, die sich ergeben aus
- Direkteinsatz Stranggußmaterial
- geregeltes Endwalzen der warmfertigen Rohre
- Warmabtrennen
ein zusätzlicher Kostenvorteil durch die zu den Vorstufen angepaßte Kaltweiterverarbeitung erzielt wird. Die aus den Vorstufen sich ergebenden Vorteile wie höherer Reinheitsgrad, geringere Randentkohlung, weniger Verzug beim abschließenden Vergüten (weniger Fertigschleifaufmaß), höhere Lebensdauer aufgrund der Feinkörnigkeit des Gefüges, das bei diesem Verfahren erhalten bleibt, können mitgenutzt werden, so daß sich ein entsprechender Gesamtvorteil ergibt.

Nachfolgend wird anhand eines Beispieles die erfindungsgemäße Herstellung eines Wälzlagerringes näher erläutert.

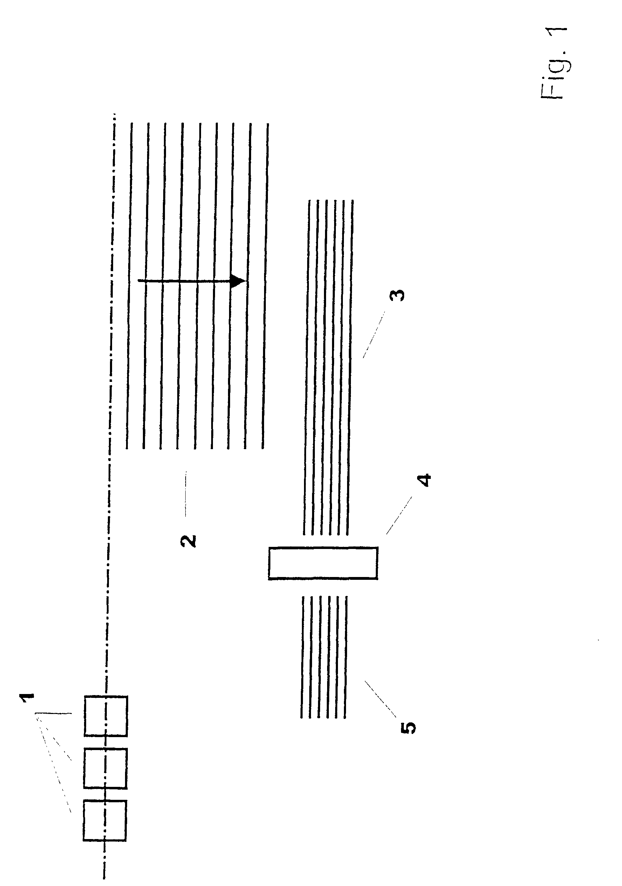

Hergestellt werden soll ein Außenring für den Wälzlagertyp 6202 (35,2 x 11,2 mm). Das dafür erforderliche Vorrohr wird gemäß der Darstellung in Figur 1 als warmfertiges Rohr in den Walzgerüsten 1 eines Streckreduzierwalzwerkes fertiggewalzt. Unter Beachtung der für ein warmfertiges Rohr herstellungsbedingten Toleranzen beträgt die Nennabmessung des Vorrohres 35,70 mm ä. D. und 3,80 mm Wanddicke. Das auf dem Kühlbett 2 abzukühlende Rohr weist bei Anwendung des speziellen in der Beschreibungseinleitung erläuterten Herstellungsprozesses das für die Weiterverarbeitung erforderliche feinkörnige perlitische Gefüge auf, so dass auf die ansonsten erforderliche GKZ-Glühung (Glühung auf kugeligen Zementit) verzichtet werden kann. Die zu Rohrlagen 3 zusammengefassten Rohre werden einer Kaltkreissäge zugeführt und in Rohrlängen 5 von ca. sechs Meter gebündelt. Für den bevorzugt gewählten Fertigungsweg sind keine weiteren Nachbehandlungsschritte am Vorrohr erforderlich.

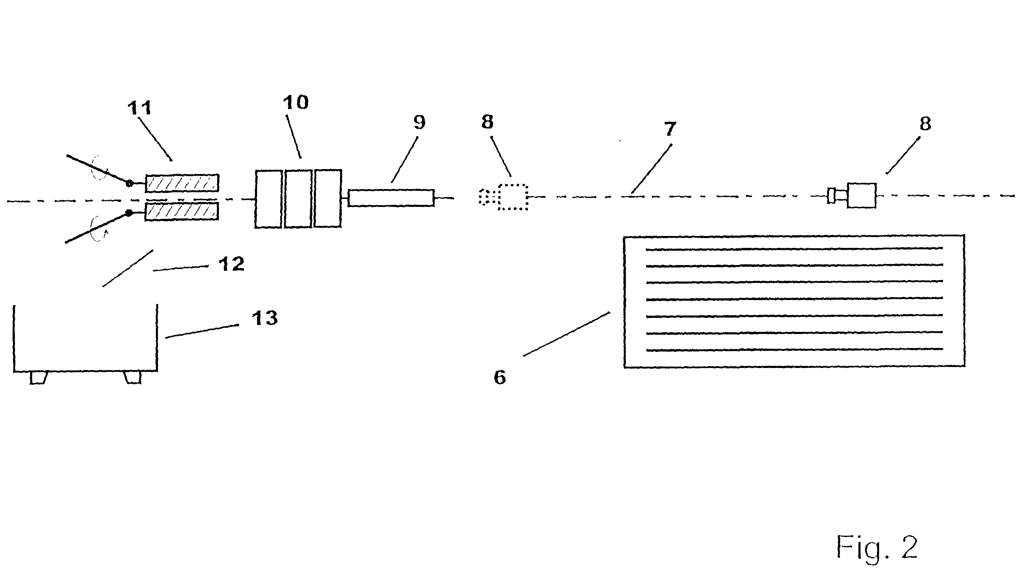

Entsprechend der Darstellung in Figur 2 werden die Rohrbunde über eine Auflage und Vereinzelungsstrecke 6 der Einwurfrinne 7 zugeführt. Ein Rotationsantrieb 8 der Warmtrennvorrichtung erfasst das Rohr und bewegt es axial sowie kurz vor dem Einlaufen in ein Trennwalzwerk 11 zusätzlich mit der erforderlichen Rotationsgeschwindigkeit. In der Endstellung des Rotationsantriebes 8 (hier durch gestrichelte Linien kenntlich gemacht) kann das zu trennende Rohr vom Rotationsantrieb 8 freigegeben werden, da der weitere Prozess eigenkinematisch erfolgt, so dass der Rotationsantrieb 8 in die Ausgangsstellung zurückgeführt und das nächstfolgende Rohr erfassen kann.

In der Pufferstrecke 9 wird der Rohranfang des nächstfolgenden Rohres bis knapp an das Rohrende des bereits im Trennprozess befindlichen Rohres herangeführt, so dass das Warmabtrennen nahezu Stoß an Stoß erfolgt. Zur Absenkung des Verformungswiderstandes wird das zu trennende Rohr mittels einer Induktionswärmungsanlage 10 auf Trenntemperatur (> 720° C aber < Umwandlungstemperatur) erwärmt. Im eigentlichen Trennwalzwerk 11 erfolgt durch spezielle Werkzeuge, die durch wendelförmig angeordnete Schneiden zunehmender Höhe auf der Mantelfläche charakterisiert sind, der eigentliche Trennprozess. Über eine Ablaufrutsche 12 werden die Rohringe in einen Behälter 13 befördert. Alternativ hierzu ist ein Abtransport über Förderbänder bei gleichzeitiger Abkühlung an ruhender Luft möglich.

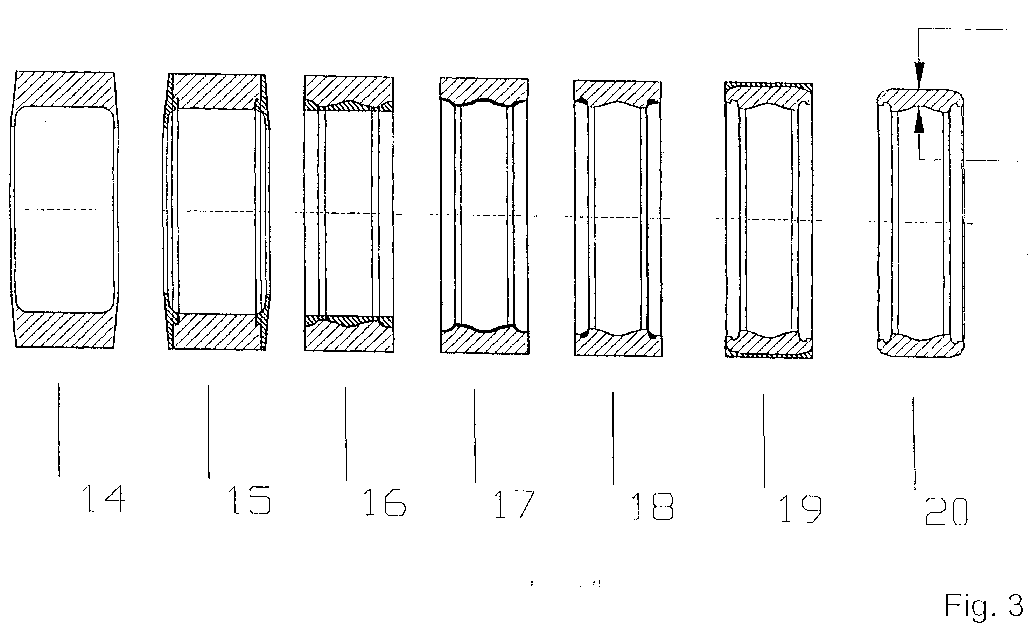

Die so gewonnenen Rohringe werden, nachdem sie auf Raumtemperatur abgekühlt sind, einer Bearbeitungsmaschine zugeführt, die in einem mehrstufigen Drehprozess den kompletten Wälzlageraußenring (Weichring) erzeugt (Fig. 3).

In der Bearbeitungsmaschine sind folgende Arbeitsschritte vorgesehen.
a) Laden 14
b) beidseitig gleichzeitiges Planen und Vorbohren 15
c) Innenkontur kopieren (Schruppen) 16
d) Innenkontur kopieren (Schlichten) 17
e) beidseitig gleichzeitiges Einstechen der Nut für die Deckscheibe sowie des angrenzenden Steges 18
f) Außenkontur kopieren 19

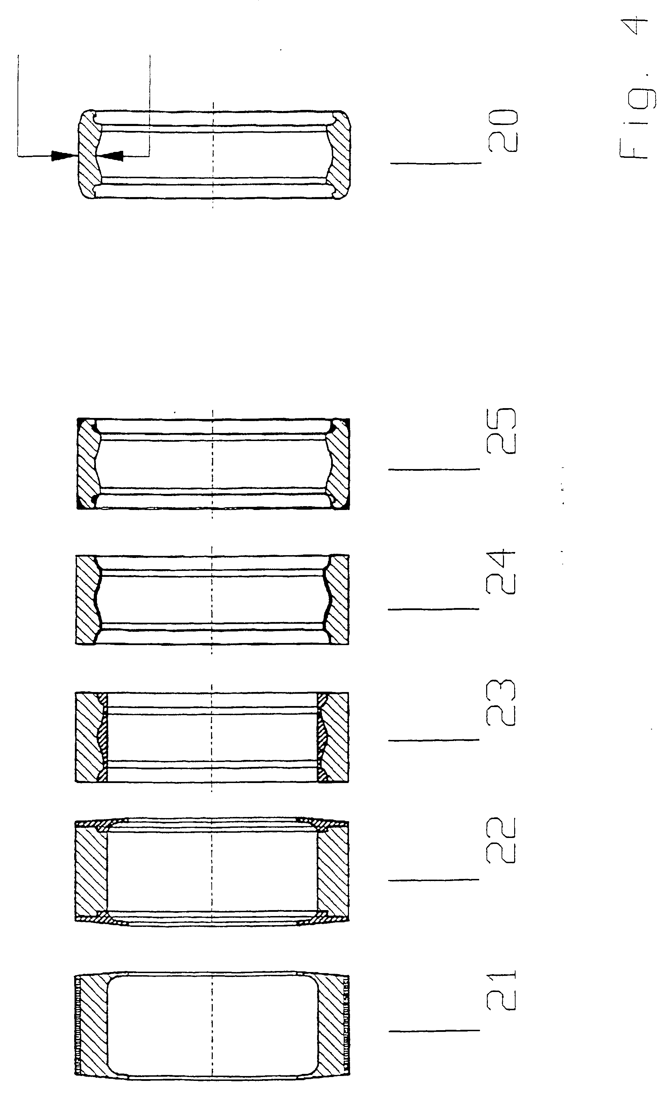

Im Falle eines vorgeschalteten partiellen Fertigschleifens der Mantelfläche des Außenringes ist eine abgeänderte Schrittfolge vorgesehen (Fig. 4).
a) Laden 21
b) beidseitig gleichzeitiges Planen und Vorbohren 22
c) Innenkontur kopieren (Schruppen) 23
d) Innenkontur kopieren (Schlichten) 24
e) beidseitig gleichzeitiges Kopieren der Außenkonturen im Bereich der Kantenverkürzung sowie beidseitig gleichzeitiges Einstechen der Nut für die Deckscheibe sowie des angrenzenden Steges 25

Danach wird der bearbeitete Ring einer Mess-Station 20 zugeführt, in der eine 100%-ige Kontrolle aller Ringe auf Geometrie und Fehlerfreiheit erfolgt. Der so gewonnene Außenring (Weichring) weist als Hauptabmessungen auf
Außendurchmesser 35,2 mm
Innendurchmesser 29,26 mm
Breite 11,21 mm

Die Unrundheit des so hergestellten Ringes ist < 0,05 mm.

## Patentansprüche

1. Verfahren zur Herstellung von Wälzlagerringen aus Stahl, ausgehend von einem durch geregeltes Endwalzen hergestellten warmgewalzten Rohr, dessen Gefüge dem auf kugeligen Zementit geglühten (GKZ) Gefüge ähnlich ist und von dem kontinuierlich gleich breite Ringe unter Zufuhr eines Schmiermittels warm abgetrennt und nach einer Abkühlung weiterverarbeitet werden,
**dadurch gekennzeichnet,**
**dass** das Warmabtrennen bei einer Temperatur unterhalb der Umwandlungstemperatur des eingesetzten Wälzlagerstahles aber größer 720°C mit einer daran anschließenden Abkühlung an ruhender Luft erfolgt und aus dem Rohring mittels einer optimiert zeitgetakteten mehrstufigen zerspanenden Kaltweiterverarbeitung ein Grün- oder Weichring eines Wälzlagerringes mit engen Toleranzen seiner Formelemente hergestellt wird, wobei der Hauptanteil der Kaltweiterverarbeitung ein Drehen ist.

2. Verfahren nach Anspruch 1,
**dadurch gekennzeichnet,**
**dass** der Rohring in einer ersten Stufe einer kombinierten Stanz- und Preßoperation unterworfen und dabei kalibriert wird.

3. Verfahren nach Anspruch 2,
**dadurch gekennzeichnet,**
**dass** der in den Bohrbereich hineinragende Grat ausgestanzt und auf die Stirnflächen eine vorgegebene Preßkraft ausgeübt wird.

4. Verfahren nach den Ansprüchen 2 und 3,
**dadurch gekennzeichnet,**
**daß** mit der Stanz- und Preßoperation bereits Formelemente des Weichringes vorprofiliert werden.

5. Verfahren nach Anspruch 1,
**dadurch gekennzeichnet,**
**daß** bei einem Außenring die beiden Stirnflächen und / oder die Mantelfläche des Rohringes auf Weichringmaß fertiggeschliffen und die übrigen Flächen in Form von Drehen bearbeitet werden.

6. Verfahren nach einem der Ansprüche 2-5,
**dadurch gekennzeichnet,**
**dass** an die Stanz- und Preßoperation und/oder das partielle Fertigschleifen sich ein mehrstufiges Drehen anschließt, wobei der Ring zweimal eingespannt wird und die Taktzeit < 8 sec. beträgt.

7. Verfahren nach Anspruch 6,
**dadurch gekennzeichnet,**
**dass** die Drehoperation folgende Einzelschritte beinhaltet
a) erste Aufspannung
- einen ersten Außenradius stechen und die Hälfte der Mantelfläche drehen
- Innenbohrung drehen
- eine Deckscheibennut sowie den angrenzenden Steg einstechen
b) zweite Aufspannung
- zweiten Außenradius stechen und die zweite Hälfte der Mantelfläche drehen
- Innenkontur kopieren
- zweite Deckscheibennut sowie den angrenzenden Steg einstechen

8. Verfahren nach einem der Ansprüche 2-5,
**dadurch gekennzeichnet,**
**dass** an die Stanz- und Preßoperation und/oder das partielle Fertigschleifen sich bei einmaliger Umspannung getaktet eine mehrstufige Drehoperation in nur einer Einrichtung anschließt und der Drehoperation eine Eingabe vor- und eine Ausgabe nachgeschaltet ist, wobei bei den ersten Stufen der Drehoperation das Werkstück steht und bei der letzten Stufe das Werkstück gedreht wird und die Gesamttaktzeit < 8 sec. ist.

9. Verfahren nach einem der Ansprüche 2 - 5,
**dadurch gekennzeichnet,**
**daß** im Falle eines vorgeschalteten Fertigschleifens der Mantelfläche des Rohraußenringes sich an das Fertigschleifen mit nur einer Aufspannung getaktet eine mehrstufige Drehoperation in nur einer Einrichtung anschließt und der Drehoperation eine Eingabe vor- und eine Ausgabe nachgeschaltet ist, wobei bei allen Stufen der Drehoperation das Werkstück steht und die Gesamttaktzeit ≤ 8 sec. ist.

10. Verfahren nach den Ansprüchen 1 und 8,
**dadurch gekennzeichnet,**
**dass** unter Wegfall der Stanz- und Preßoperation und/oder des partiellen Fertigschleifens der Rohring direkt der mehrstufigen Drehoperation unterworfen wird.

11. Verfahren nach den Ansprüchen 8 und 10,
**dadurch gekennzeichnet,**
**dass** für einen Außenring die Abfolge folgende Einzelschritte beinhaltet
a) Stirnflächen beidseitig und gleichzeitig planen und vorbohren.
b) Innenkontur der Lauffläche schruppen.
c) Innenkontur der Lauffläche schlichten.
d) Deckscheibennut sowie angrenzender Steg beidseitig und gleichzeitig einstechen
e) Außendurchmesser auf Endmaß drehen.

12. Verfahren nach Anspruch 9,
**dadurch gekennzeichnet,**
**daß** für einen Außenring mit fertiggeschliffener Mantelfläche die Abfolge folgende Einzelschritte beinhaltet:
a) Stirnflächen beidseitig und gleichzeitig planen und verbolzen
b) Innenkontur der Lauffläche schruppen
c) Innenkontur der Lauffläche schlichten
d) Außenkontur im Bereich der Kantenverkürzung beidseitig gleichzeitig kopieren und Deckscheibennut sowie angrenzenden Steg beidseitig und gleichzeitig einstechen

13. Verfahren nach Anspruch 11 oder 12,
**dadurch gekennzeichnet,**
**dass** bei den Arbeitsschritten [b), c), d)] die Zerspanung überlagernd axial und radial erfolgt.

14. Verfahren nach den Ansprüchen 8 bis 13,
**dadurch gekennzeichnet,**
**dass** nur während der Zerspanung ein Schmiermittel impulsartig zugeführt wind.

15. Verfahren nach Anspruch 14,
**dadurch gekennzeichnet,**
**dass** das Schmiermittel ein Gemisch aus Druckluft und Bohremulsion ist, wobei die Bohremulsion nur tröpfchenweise der Druckluft zugesetzt wird.

16. Verfahren nach Anspruch 1,
**dadurch gekennzeichnet,**
**dass** nach dem Warmabtrennen und Abhühlen der Rohring vergütet und der gehärtete Rohring anschließend zerspanend bearbeitet wird.

17. Verfahren nach den Ansprüchen 2-4,
**dadurch gekennzeichnet,**
**dass** nach der Stanz- und Preßoperation der Rohring vergütet und der gehärtete Vorring anschließend fertig zerspanend bearbeitet wird.

18. Verfahren nach einem der Ansprüche 14-17,
**dadurch gekennzeichnet,**
**dass** die Kaltweiterverarbeitung ein Hartdrehen und/oder Hartschleifen ist.

19. Verfahren nach Anspruch 1
**dadurch gekennzeichnet,**
**dass** die warmgewalzten Rohre nach dem Abkühlen zuerst spannungsarm geglüht, dann gerichtet und vor dem Warmabtrennen zerstörungsfrei auf Fehler geprüft werden.

20. Verfahren nach Anspruch 19,
**dadurch gekennzeichnet,**
**dass** die zerstörungsfrei Prüfung eine US -Prüfung auf Längs- und Querfehler ist.

21. Verfahren nach einem der Ansprüche 1 bis 20,
**dadurch gekennzeichnet,**
**dass** nach der Kaltweiterverarbeitung jeder einzelne Wälzlagerring einer Abmessungs- und einer zerstörungsfreien Fehlerprüfung unterzogen wird.

22. Verfahren nach Anspruch 21,
**dadurch gekennzeichnet,**
**dass** die Abmessungsprüfung mittels Laser und die zerstörungsfreie Prüfung mittels Ultraschall oder Wirbelstrom erfolgt.

23. Verfahren nach den Ansprüchen 19 bis 22,
**dadurch gekennzeichnet,**
**dass** unter Verzicht einer zerstörungsfreien Prüfung des warrngewalzten Rohres nur die fertig bearbeiteten Wälzlagerringe einer Abmessungs- und zerstörungsfreien Fehlerprüfung unterzogen werden.

## Claims

1. A process for the production of roller bearing rings from steel, starting with a hot-rolled tube produced by controlled end-rolling, the structure of which is similar to the structure annealed to globular cementite (AGC) and from which rings of equal width are separated off continuously in the hot state with a lubricant being supplied and are processed further after cooling,
**characterised in that**
the hot separation takes place at a temperature below the transformation temperature of the anti-friction bearing steel used but greater above 720°C with subsequent cooling in still air and a green or soft ring of a roller bearing ring with narrow tolerances of its form elements is produced from the rough ring by means of optimised timed multi-stage material-removing cold further processing, the main component of the cold further processing being turning.

2. A process according to Claim 1, **characterised in that** the rough ring in a first stage is subjected to a combined punching and pressing operation and in so doing is calibrated.

3. A process according to Claim 2, **characterised in that** the flash projecting into the boring region is punched out and a predetermined pressure force is exerted on the end faces.

4. A process according to Claims 2 and 3, **characterised in that** form elements of the soft ring are already rough-profiled with the punching and pressing operation.

5. A process according to Claim 1, **characterised in that** in the case of an outer ring the two end faces and/or the generated surface of the rough ring are finish-ground to soft-ring dimensions and the other surfaces are machined by turning.

6. A process according to one of Claims 2 to 5, **characterised in that** the punching and pressing operation and/or the partial finish-grinding is succeeded by a multi-stage turning operation, with the ring being chucked twice and the cycle time being < 8 seconds.

7. A process according to Claim 6, **characterised in that** the turning operation comprises the following individual steps:
a) first chucking operation
- cutting a first outer radius and turning half of the generated surface
- turning inner bore
- cutting a cover plate groove and the adjoining land
b) second chucking operation
- cutting the second outer radius and turning the second half of the generated surface
- copying inner contour
- cutting second cover plate groove and the adjoining land.

8. A process according to one of Claims 2 to 5, **characterised in that** in the case of a single re-chucking operation in timed manner a multi-stage turning operation in only one apparatus follows the punching and pressing operation and/or the partial finish-grinding, and the turning operation is preceded by an introduction and succeeded by a delivery, wherein the workpiece is stationary in the first stages of the turning operation and the workpiece is turned in the last stage and the total cycle time is < 8 seconds.

9. A process according to one of Claims 2 to 5, **characterised in that** in the case of a preceding finish-grinding of the generated surface of the tube outer ring a multi-stage turning operation in only one apparatus follows the finish-grinding with only one chucking operation in timed manner and the turning operation is preceded by an introduction and succeeded by a delivery, wherein the workpiece is stationary in all stages of the turning operation and the total cycle time is ≤ 8 seconds.

10. A process according to Claims 1 and 8, **characterised in that** the rough ring is subjected directly to the multi-stage turning operation, omitting the punching and pressing operation and/or the partial finish-grinding.

11. A process according to Claims 8 and 10, **characterised in that** for an outer ring the sequence comprises the following individual steps:
a) facing and rough-drilling end faces on both sides simultaneously,
b) roughing inner contour of the running surface,
c) finishing inner contour of the running surface,
d) cutting cover plate groove and adjoining land on both sides simultaneously,
e) turning external diameter to final dimension.

12. A process according to Claim 9, **characterised in that** for an outer ring with a finish-ground generated surface the sequence comprises the following individual steps:
a) facing and bolting end faces on both sides simultaneously,
b) roughing inner contour of the running surface,
c) finishing inner contour of the running surface,
d) copying outer contour in the region of the shortened edges on both sides simultaneously and cutting cover plate groove and adjoining land on both sides simultaneously.

13. A process according to Claim 11 or 12, **characterised in that** in the working steps [b), c), d)] the machining takes place overlapping axially and radially.

14. A process according to Claims 8 to 13, **characterised in that** a lubricant is supplied in pulsed manner only during the machining.

15. A process according to Claim 14, **characterised in that** the lubricant is a mixture of compressed air and drilling emulsion, the drilling emulsion being added to the compressed air only in droplets.

16. A process according to Claim 1, **characterised in that** after the hot separation and cooling the rough ring is hardened and tempered and the hardened rough ring is then machined.

17. A process according to Claims 2 to 4, **characterised in that** after the punching and pressing operation the rough ring is hardened and tempered and the hardened preliminary ring is then finish-machined.

18. A process according to one of Claims 14 to 17, **characterised in that** the cold further processing is hard turning and/or hard grinding.

19. A process according to Claim 1, **characterised in that** the hot-rolled tubes after cooling are first subjected to stress-relief annealing, then are straightened and are tested non-destructively for flaws before the hot separation.

20. A process according to Claim 19, **characterised in that** the non-destructive testing is ultrasound testing for longitudinal and transverse flaws.

21. A process according to one of Claims 1 to 20, **characterised in that** after the cold further processing each individual roller bearing ring is subjected to dimensional testing and non-destructive flaw testing.

22. A process according to Claim 21, **characterised in that** the dimensional testing takes place using a laser and the non-destructive testing by means of ultrasound or eddy currents.

23. A process according to Claims 19 to 22, **characterised in that**, dispensing with non-destructive testing of the hot-rolled tube, only the finish-machined roller bearing rings are subjected to dimensional testing and non-destructive flaw testing.

## Revendications

1. Procédé de production de bagues de roulement en acier, à partir d'un tube laminé à chaud fabriqué par laminage final contrôlé, dont la structure est similaire à la structure de recuit de coalescence de la cémentite (GKZ), et à partir duquel des bagues de même largeur sont tronçonnées à chaud en continu avec introduction d'un agent de lubrification et soumises à un usinage ultérieur après refroidissement,
**caractérisé en ce que** le tronçonnage à chaud a lieu à une température inférieure à la température de transformation de l'acier à roulements utilisé, mais supérieure à 720°C, avec un refroidissement consécutif à l'air statique et **en ce que**, à partir de la bague brute, une bague verte ou douce pour bague de roulement est fabriquée avec des tolérances étroites de ses éléments de forme au moyen d'un usinage ultérieur à froid par enlèvement de copeaux à étages multiples et à cadence optimisée, la partie principale de l'usinage ultérieur à froid étant un tournage.

2. Procédé selon la revendication 1,
**caractérisé en ce que** la bague brute est soumise, dans une première étape, à une opération combinée de poinçonnage et de compression et, en même temps, calibrée.

3. Procédé selon la revendication 2,
**caractérisé en ce que** la bavure faisant saillie dans la zone d'alésage est découpée à la matrice et une force de compression prédéfinie est exercée sur les surfaces frontales.

4. Procédé selon les revendications 2 et 3,
**caractérisé en ce que** l'opération de poinçonnage et de compression ébauche déjà le profil des éléments de forme de la bague douce.

5. Procédé selon la revendication 1,
**caractérisé en ce que**, pour une bague extérieure, les deux surfaces frontales et/ou la surface périphérique de la bague brute sont rectifiées aux dimensions de la bague douce et les autres surfaces sont façonnées par tournage.

6. Procédé selon l'une des revendications 2 à 5,
**caractérisé en ce qu'**un tournage à étages multiples suit l'opération de poinçonnage et de compression et/ou la rectification de finition partielle, la bague étant serrée deux fois et le temps de cycle étant inférieur à 8 s.

7. Procédé selon la revendication 6,
**caractérisé en ce que** l'opération de tournage comprend les étapes individuelles suivantes :
a) premier serrage
- réalisation d'un premier rayon extérieur et tournage de la moitié de la surface périphérique
- tournage d'alésage intérieur
- réalisation d'une rainure de disque de recouvrement ainsi que de la nervure adjacente
b) second serrage
- réalisation du second rayon extérieur et tournage de la seconde moitié de la surface périphérique
- copiage du contour intérieur
- réalisation de la seconde rainure de disque de recouvrement ainsi que de la nervure adjacente.

8. Procédé selon l'une des revendications 2 à 5,
**caractérisé en ce qu'**une opération de tournage à étages multiples en un seul dispositif avec un seul changement suit l'opération de poinçonnage et de compression et/ou la rectification de finition partielle et l'opération de tournage est précédée d'une alimentation et suivie d'une sortie, la pièce à usiner étant debout dans les premières étapes de l'opération de tournage et tournée dans la dernière étape et le temps de cycle total étant inférieur à 8 s.

9. Procédé selon l'une des revendications 2 à 5,
**caractérisé en ce que**, si une rectification de finition de la surface périphérique de la bague extérieure de tube est placée en amont, une opération de tournage à étages multiples dans un seul dispositif et avec un seul serrage suit la rectification de finition et l'opération de tournage est précédée d'une alimentation et suivie d'une sortie, la pièce à usiner étant debout dans toutes les étapes de l'opération de tournage et le temps de cycle total étant inférieur ou égal à 8 s.

10. Procédé selon les revendications 1 et 8,
**caractérisé en ce que** l'opération de poinçonnage et de compression et/ou la rectification de finition partielle étant abandonnée, la bague brute est directement soumise à l'opération de tournage à étages multiples.

11. Procédé selon les revendications 8 et 10,
**caractérisé en ce que**, pour une bague extérieure, la succession des opérations comprend les étapes individuelles suivantes :
a) planage bilatéral et simultané des surfaces frontales et alésage d'un avant-trou
b) ébauchage du contour intérieur de la surface de roulement
c) finition du contour intérieur de la surface de roulement
d) réalisation bilatérale et simultanée de la rainure de disque de recouvrement ainsi que de la nervure adjacente
e) tournage du diamètre extérieur aux dimensions finales.

12. Procédé selon la revendication 9,
**caractérisé en ce que**, pour une bague extérieure avec surface périphérique rectifiée, la succession des opérations comporte les étapes individuelles suivantes :
a) planage bilatéral et simultané des surfaces frontales et alésage d'un avant-trou
b) ébauchage du contour intérieur de la surface de roulement
c) finition du contour intérieur de la surface de roulement
d) copiage bilatéral simultané du contour extérieur dans la zone du raccourcissement de bord et réalisation bilatérale et simultanée de la rainure de disque de recouvrement ainsi que de la nervure adjacente.

13. Procédé selon la revendication 11 ou 12,
**caractérisé en ce que**, dans les opérations [b), c), d1], l'enlèvement de copeaux a lieu de façon superposée axialement et radialement.

14. Procédé selon les revendications 8 à 13,
**caractérisé en ce qu'**un agent de lubrification est introduit par impulsions uniquement pendant l'enlèvement de copeaux.

15. Procédé selon la revendication 14,
**caractérisé en ce que** l'agent de lubrification est un mélange d'air comprimé et d'émulsion d'alésage, l'émulsion d'alésage n'étant ajoutée à l'air comprimé que par gouttelettes.

16. Procédé selon la revendication 1,
**caractérisé en ce que**, après le tronçonnage à chaud et le refroidissement, la bague brute est soumise à un traitement thermique et la bague brute trempée est ensuite usinée par enlèvement de copeaux.

17. Procédé selon les revendications 2 à 4,
**caractérisé en ce que**, après l'opération de poinçonnage et de compression, la bague brute est soumise à un traitement thermique et la bague de départ trempée est ensuite finie par un usinage par enlèvement de copeaux.

18. Procédé selon l'une des revendications 14 à 17,
**caractérisé en ce que** l'usinage ultérieur à froid est un tournage dur et/ou une rectification dure.

19. Procédé selon la revendication 1,
**caractérisé en ce que** les tubes laminés à chaud, après refroidissement, sont d'abord soumis à un recuit léger de détensionnement, puis dressés et, avant le tronçonnage à chaud, soumis à un contrôle de défauts non destructif.

20. Procédé selon la revendication 19,
**caractérisé en ce que** le contrôle non destructif est un contrôle US des défauts longitudinaux et transversaux.

21. Procédé selon l'une des revendications 1 à 20,
**caractérisé en ce que**, après l'usinage ultérieur à froid, chacune des bagues de roulement est soumise à un contrôle dimensionnel et à un contrôle de défauts non destructif.

22. Procédé selon la revendication 21,
**caractérisé en ce que** le contrôle dimensionnel est réalisé par laser et le contrôle non destructif par ultrason ou courant de Foucault.

23. Procédé selon les revendications 19 à 22,
**caractérisé en ce que**, si l'on renonce à un contrôle non destructif du tube laminé à chaud, seules les bagues de roulement finies sont soumises à un contrôle dimensionnel et à un contrôle de défauts non destructif.
